# EUROPEAN PATENT SPECIFICATION

(11) **EP 2 706 839 B1**
(45) Date of publication and mention of the grant of the patent: **22.08.2018**
(21) Application number: 12783027.1
(22) Date of filing: 25.04.2012
(51) Int. Cl.: B63B 21/20, B63B 21/50, A01K 61/65

(54) **MOORING SYSTEM AND USE OF A CONNECTION ELEMENT IN SAID MOORING SYSTEM**
VERANKERUNGSSYSTEM UND VERWENDUNG EINES VERBINDUNGSELEMENTS IN DIESEM VERANKERUNGSSYSTEM
SYSTÈME D'AMARRAGE ET UTILISATION D'UN ÉLÉMENT DE CONNEXION DANS CE SYSTÈME D'AMARRAGE

(30) Priority: 10.05.2011 NO 20110697; 16.04.2012 NO 20120444
(43) Date of publication of application: 19.03.2014
(73) Proprietor: Mørenot AS, 6280 Søvik (NO)
(72) Inventor: ELSTAD, Trond, 6280 Søvik (NO); ASKELAND, Yngve, 5535 Haugesund (NO)
(74) Representative: Håmsø Patentbyrå AS
(86) International application number: PCT/NO2012/050076
(87) International publication number: WO 2012/154054

(56) References cited:
- WO-A1-2007/085429
- CN-Y- 2 488 289
- US-A- 3 046 045
- US-A1- 2006 261 617
- US-A1- 2010 058 991
- US-A1- 2010 239 374
- US-B1- 7 628 435

## Description

The invention relates to a mooring system for floating structures. More particularly, the invention relates to a connection element for connecting submerged elements of a compound mooring system in which the elements subject the connection element to tensile forces in different directions which are not in the same plane.

Structures which are floating in water and which are desirably to be held in a fixed position are moored with several moorings running substantially submergedly from the structure to one or more fixed points. Structures lying close to islands and mainland may be moored entirely or partially to fixed points on shore. Structures which are some distance from shore or in the open sea are moored to heavy objects on the seabed. Such objects may be anchors of various known kinds, or sunk bodies adapted for the purpose, such as concrete blocks, for example. Where conditions allow it, a combination of moorings to shore and to anchors may be used.

In what follows, the invention is described in connection with sea water, but the invention is equally suitable for use in lakes and brackish water zones. As an example of a floating structure, a net-cage system for the farming of fish is described. Other floating structures may include floating stages and floating quays, platforms and offshore wind turbines, for example.

In what follows, a net-cage system for the farming of fish will be termed a floating farming facility. Floating farming facilities are normally subject to regulatory requirements. Such regulatory requirements include, *inter alia,* marking of the farming facility to avoid vessels colliding with the facility, and the facility not being wrecked in bad weather or being damaged.

A floating farming facility comprises some main components. These main components are constituted by a net bag, a floating collar, a raft and mooring. The main components shall be compatible with respect to functions and materials.

It is well known that failures in mooring systems have resulted in farming net cages sustaining damage, especially in bad weather. By such sea damage, a large number of fish escape from the net cages. Such escapes of fish are environmentally undesirable. In addition there is the economic loss of equipment and fish for the owner of the farming facility by such damage. There has therefore been a development towards constantly stronger mooring systems. Important components in such mooring systems are usually constituted by steel as steel is known to have great strength. There is therefore extensive use of chains, wires, shackles and eyelets in a mooring system. It is well known how the dimensions of such metallic connections are to be calculated to achieve the desired strength.

A farming facility may be constituted by one net cage. The normal thing is that a farming facility is constituted by several net cages. Usually, they form one row or two rows of net cages. The longitudinal direction of the row or rows is usually laid perpendicularly to the predominant direction of flow to achieve the best possible water flow in the net cages. Hereinafter, reference will be made to a farming facility constituted by at least two net cages. The mooring system of the farming facility may be constituted by a plurality of anchors. To the anchors, heavy chains which normally lie on the sea floor may be attached. At their first ends, the chains are attached to the anchor and, at their second ends, to a wire or line extending from the chain to a so-called node in a submerged frame. This line may be a rope constituted by a polymer material and will be termed an anchor line in what follows. There may be two anchor lines in different directions which are connected at a node. The frame surrounds each net cage in the farming facility. The frame is constituted by lines of a polymer material, like ropes, for example, or of steel wires. Thus, from one node, a line or a wire extends to the next node in the frame. These lines will be termed frame lines in what follows. Attached to the node, there is further a line extending to a floating body on the water surface. The floating body may be constituted by a float or a buoy. This line will be directed substantially vertically and is termed a buoy line in what follows. The floating body and the buoy line hold the frame at a desired depth so that vessels approaching the farming facility may pass above the frame. From the node, at least one further line extends to an attachment point in the floating collar of the net cage. Usually, there are two or three lines extending from one node to two or three different attachment points in the floating collar of the net cage. Within the trade, these lines are known as a crowfoot. In what follows, the term net-cage mooring line will be used about these lines. There may be up to four crowfeet connected to one node.

Thus, the connection element at the node must be able to resist tensile forces, directed at a downward angle, from the anchor line or anchor lines, substantially horizontally directed tensile forces, from the frame line, tensile forces directed at an upward angle, from the crowfoot, and tensile forces directed vertically, from the buoy line. One connection element at a node with four crowfeet, each with three net-cage mooring lines, will be connected to 16 lines extending in different directions and, in addition, possibly connected to a floating line.

Strength calculations are required for a mooring system. Components of steel are much used because of the strength of the steel. It is known to use a circular steel plate, with through holes along the circumference of the steel plate, as a connection element at a node. Lines that are to be connected to the steel plate are provided with an eyelet as a bushing in an eye splice and a shackle connects the eye to a through hole in the steel plate. Chains are connected to the steel plate with a shackle running through a link in the chain. Strength calculations have to be done three-dimensionally as the steel components, especially the steel plate, are not twistable or flexible. The use of steel components in a mooring system also has drawbacks. Steel is heavy and is in itself a load on the mooring system. For example, the floating elements holding up the frame must be dimensioned in relation to this. Another drawback is corrosion. Corrosion-resistant alloys are expensive. Handling such heavy components is also a challenge in terms of working environment. Steel components may also tear holes in the net forming the substantial part of the submerged structure of the net cages and preventing the fish from swimming away. When an opening is created in the form of a rip or tear in the net, fish will escape through this opening.

There are also requirements for inspection of the mooring system. Some suppliers require inspection to be carried out every three months in order for the certificate of the mooring system to be valid. This requires the mooring system to be raised to the surface in order for visual inspection to be carried out. Typically, there may be 12 to 14 nodes in a farming facility which is to be inspected in this way, so that is an extensive job. A common fault that occurs is that nuts unscrew from the shackle bolts that connect the different line types to the steel plate forming the connection element.

It is known to use ropes as an alternative to steel in parts of a mooring system. The individual ropes are connected to other ropes by means of knots of types known *per se.* It is known that a knot in a rope weakens the strength of the rope. A safety factor of 5 is therefore used for such ropes. This means that the breaking strength of the rope is to exceed the calculated maximum load by a factor of 5. In some cases, such ropes will require a large diameter and therefore become relatively difficult to handle. The patent document CN 2488289 (utility model) discloses a mooring system for a farming facility as described above, which includes anchor lines, frame lines, buoy lines and net-cage mooring lines. The connection element at a node is formed of a ring to which the lines are attached. A ring is rigid and, like a steel plate, will not be flexible or twistable.

For lifting operations it is known to use endless loop slings, known in the trade as round slings. A round sling comprises one or more long polymer fibres lying side by side and having been passed round and round in a circle a great number of times. The polymer fibre or polymer fibres thereby form(s) an annular bundle before the polymer fibre or polymer fibres is/are cut. The polymer fibre may be formed out of polyester. The annular bundle is surrounded by a soft sheet-like polymer material. The sheath material may be sewn to itself so that it completely encloses the annular bundle. Such a round sling is known to have great breaking strength. Round slings come in different effective lengths, in different breaking strengths and in different cross-sectional sizes. As the round sling is constituted by soft materials, it is compliant while maintaining its breaking strength at the same time. The patent document WO 2007/085429 generally describes, introductorily, the fact that a connection may be formed between two objects by attaching a round sling to both objects, for example by tying or by wrapping/winding the round sling around the object. The patent document US 2010/0239374 discloses a mooring system of a floating protection structure comprising at least one rope configured in an endless roundsling construction. The invention has for its object to remedy or reduce at least one of the drawbacks of the prior art or at least provide a useful alternative to the prior art.

The object is achieved through features which are specified in the description below and in the claims that follow.

According to the invention, instead of using rigid metal and metal alloys as connection elements in the node of the mooring system, a flexible and twistable connection element constituted by a soft material is used. More specifically, the connection element is constituted by a round sling of a kind known *per se.* To the connection element, frame lines, anchor lines, buoy lines and net-cage mooring lines may be attached. If frame lines, anchor lines, buoy lines and net-cage mooring lines are attached to the soft connection element by shackles, the metal of the shackles will damage the connection element by rubbing. To avoid such rubbing, the invention further includes that the different lines being provided with round slings of their own at their end portions.

The lines may be attached to their own round slings by a loop-in-loop connection. This loop-in-loop connection is often termed a reef knot. Testing has proved that the line is not weakened by such a connection. A safety factor of 3 can thereby be used as a general safety factor for lines constituted by a polymer material. It is very advantageous that the safety factor has been reduced from 5, as described above, and to 3, as this reduces the dimensions of the lines. The round slings that are attached to the different line types will be termed line round slings in what follows. Line round slings may be attached to the connection elements by a connection in which the line round sling has been threaded through itself (choked) around the connection element. According to table books, round slings which have been choked in towards a connection element will have a reduced breaking load, so that the breaking load constitutes 0.8 x the nominal breaking load. The choking of the line round sling on the soft and flexible connection element makes the attachment be kept stable and there will be minimal friction wear on the connection element and on the line round sling.

To increase the strength of the connection element at the node and facilitate inspection work, the round sling forming the connection element may include two sheaths. An inner sheath is constituted by a sheet-like polymer material of a first colour, and an outer sheath surrounding the inner sheath is constituted by a sheet-like polymer material of a second colour which is different from the first colour. The first and second colours can be chosen to be such that there is a large visual contrast between the colours. The colours may further be chosen to be such that they are fit to be visible in sea water, in which different wave lengths of visible light have different penetration power in the water column. The inner sheath may be constituted by one or more layers of sheet-like polymer material. The outer sheath may be constituted by one or more layers of sheet-like polymer material. Wear on the outer sheath from one or more line round slings is made visible by the inner sheath appearing because of the difference in colour where a portion of the outer sheath has been worn away. Such wear will be visible to a diver, by the use of an underwater camera or by inspection from the surface through, for example, a water glass. This has the advantage of the connection element not having to be hoisted to the surface for inspection in the way known for connection elements constituted by a metal. The use of two sheaths provides extra security when it comes to strength, and it gives a warning about necessary maintenance or replacement of the connection element.

In the same way as for the connection element, the line round sling may include two sheaths. An inner sheath is constituted by a sheet-like polymer material of a third colour, and an outer sheath surrounding the inner sheath is constituted by a sheet-like polymer material of a fourth colour which is different from the first colour. The third and fourth colours can be chosen to be such that there is a large visual contrast between the colours and that they are different from the first colour and the second colour. The colours may further be chosen to be such that they are fit to be visible in sea water, in which different wave lengths of visible light have different penetration power in the water column. The inner sheath may be constituted by one or more layers of sheet-like polymer material. The outer sheath may be constituted by one or more layers of sheet-like polymer material. Wear on the outer sheath from the connection element or from the attached line is made visible by the inner sheath appearing because of the difference in colour where a portion of the outer sheath has been worn away.

In a first aspect, the invention relates to a mooring system for floating structures, the mooring system including, according to claim 1, at least one anchor line and at least two other lines which extend in different directions relative to each other and in a different direction from that of the at least one anchor line, said lines being attached to an annular connection element. The annular connection is constituted by a round sling comprising endless, flexible polymer material, and the at least one of the lines is attached to the annular connection element with a line round sling.

The round sling may include an inner sheath and an outer sheath. The inner sheath may be constituted by a sheet-like polymer material of a first colour, and the outer sheath may be constituted by a sheet-like polymer material of a second colour, the first colour being different from the second colour.

The line round sling may include an inner sheath and an outer sheath. The inner sheath may be constituted by a sheet-like polymer material of a third colour and the outer sheath may be constituted by a sheet-like polymer material of a fourth colour, the third colour being different from the fourth colour.

The invention also relates to a floating structure according to claim 7 provided with a mooring system as described above. The floating structure may be constituted by a farming facility for fish.

In a further aspect, the invention relates to a method of establishing a mooring system for a floating structure, according to claim 9, wherein the floating structure is moored to a seabed by at least one anchor line which is attached at its first end portion to an anchor, and wherein the mooring system includes at least two other lines which are extended in different directions relative to each other and which are extended in a different direction from that of the at least one anchor line, and wherein said lines are attached to an annular connection element, the method further including:
- providing a flexible, annular connection element constituted by a round sling comprising endless, flexible polymer material;
- forming a closed loop on one end portion of the line;
- forming a loop-in-loop connection between the loop of the line and a line round sling at the first end portion of the line round sling; and
- forming a connection between the connection element and the line round sling at the second end portion of the line round sling by threading the line round sling through and around the connection element and in such a way that the line round sling is threaded through itself.
The method may further include:
- providing at least one of the annular connection element and the line round sling with an inner sheath of a sheet-like polymer material and an outer sheath of a sheet-like polymer material.
The method may include:
- providing at least one of the flexible, annular connection element and the line round sling with an inner sheath which exhibits a first colour or a third colour, and an outer sheath which exhibits a second colour or a fourth colour, the first and third colours being different from the second and fourth colours.

In a further aspect, the invention relates to the use according to claim 12 of a round sling comprising endless, flexible polymer material to form a flexible, annular connection element, and use of a round sling comprising endless, flexible polymer material to form a line round sling in a mooring system for a floating structure, the mooring system including at least one anchor line, and the mooring system including at least two other lines extending in different directions relative to each other and extending in a different direction from that of the at least one anchor line, and said lines being attached to the connection element by the line round sling.

In what follows, examples of preferred embodiments are described, which are visualized in the accompanying drawings, in which:
- Figure 1: shows schematically a farming facility and the components of the mooring system of the farming facility in view from above;
- Figure 2: shows schematically a side view of a farming facility and the components of the mooring system of the farming facility;
- Figure 3: shows schematically a perspective view of a farming facility and the components of the mooring system of the farming facility;
- Figures 4A-B: show schematically, on a larger scale, the node of the mooring system and three lines attached to the node with line round slings, and with alternative line types; and
- Figures 5A-B: show schematically, on the same scale as figure 4, an alternative method of attaching three lines to the node, said alternative method is not part of the invention.

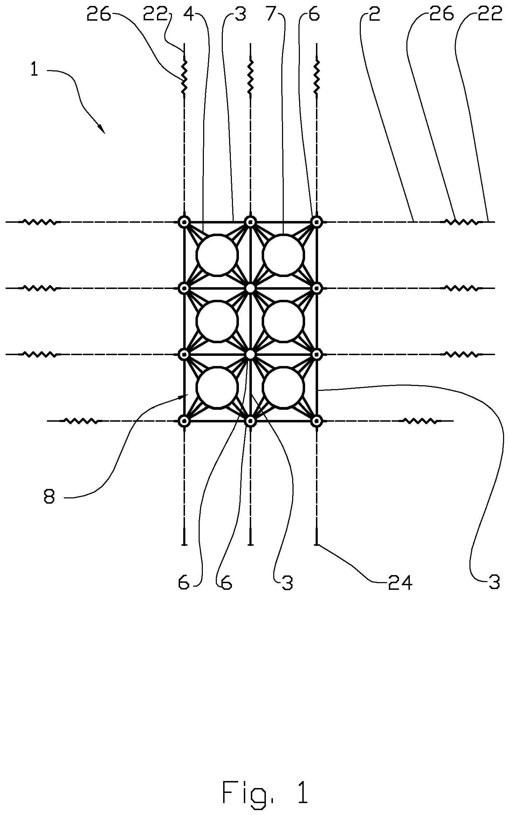

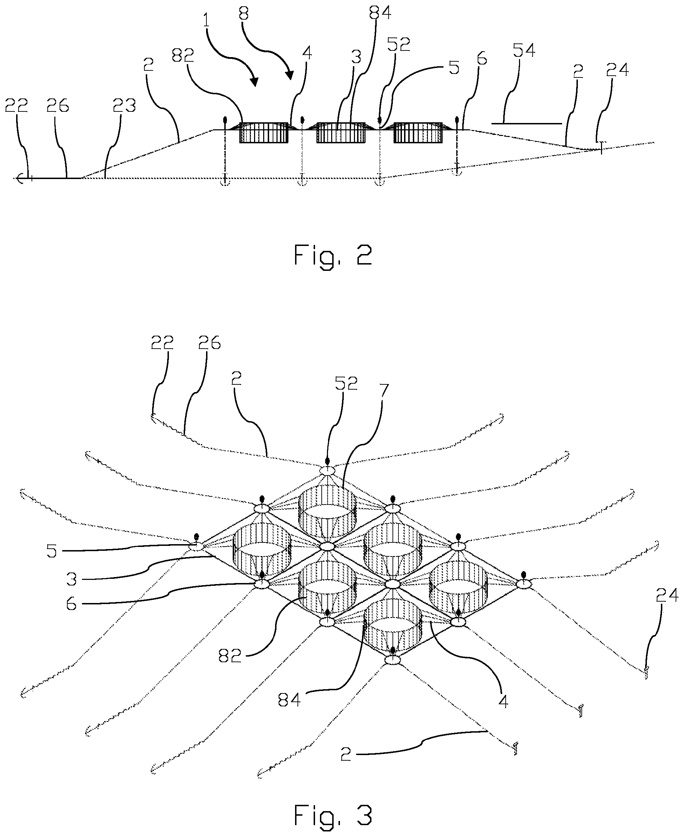

In the drawings, the reference numeral 1 indicates a mooring system in accordance with the invention. The mooring system 1 includes anchor lines 2, frame lines 3, net-cage mooring lines 4, buoy lines 5 and connection elements 6. The mooring system 1 holds a farming facility 8 including net cages 82 fixed. In figure 1, the net cages 82 are shown schematically by the floating collars 7 of the net cages. In figures 2 and 3, the net cages 82 are additionally shown schematically by net walls 84.

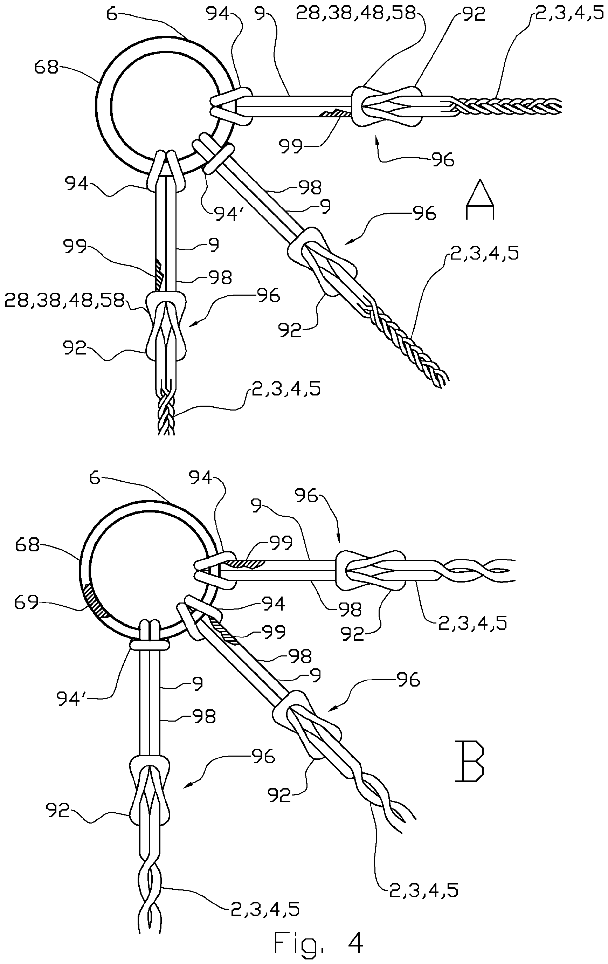

At their first end portions, the anchor lines 2 are attached to a chain 26 at the first end portion of the chain 26. At its second end portion, the chain 26 is attached to an anchor 22 resting on a seabed 23. The chain 26 is heavy and will also rest on the seabed 23 when there is relatively little tension on the anchor line 2. When the tension on the anchor line 2 increases, a portion of the chain 26 will be lifted from the seabed 23, possibly all the way until the entire chain 26 has been lifted up. This has the advantage of the anchor line 2 not being subjected to jerks. The anchor lines 2 may alternatively be attached to land attachments 24 when conditions are favourable for this. At their second end portions, the anchor lines 2 are attached to a line round sling 9 as shown in figures 4A-B. In the second end portion of the anchor line 2, a closed loop 28 has been formed, for example by eye-splicing ropes forming the anchor line 2, in a manner known *per se.* In its position of application, that is to say when extended, the line round sling 9 forms, at its first end portion 92, a loop-in-loop connection 96 with the anchor line 2. This connection constitutes a reef knot as shown in figures 4A-B. At its second end portion 94, the line round sling 9 forms a loop connection with the connection element 6. The loop connection is formed by threading the line round sling 9 through and around the connection element 6 and in such a way that the line round sling 9 is threaded through itself as shown in figures 4A-B. In the figures 1-3, one and two anchor lines 2 attached to one connection element 6 is/are shown. This is not restrictive, as, whenever needed, further anchor lines 2 may be attached to one connection element 6. In the drawings, the connection element 6 is shown as being circular. This is just schematic. The connection element 6 is constituted by a flexible material and will take the form determined by the pull forces on the lines 2, 3, 4, 5 that are attached to the connection element 6.

The frame line 3 extends from one connection element 6 to another connection element 6. As shown in figures 1 and 3, several frame lines 3 form a framework around the net cages 82 in the farming facility 8. As shown in figure 2, connection elements 6 and frame lines 3 are submerged so deep that a vessel may pass above the frame lines 3 to approach the net cages 82 of the farming facility 8. At their end portions, the frame lines 3 are provided with line round slings 9. At the end portions of the frame lines 3, closed loops 38 have been formed, for example by eye-splicing the ropes that form the frame line 3, in a manner known *per se.* In its position of application, that is to say when extended, the line round sling 9 forms, at its first end portion 92, a loop-in-loop connection 96 with the frame line 3. This connection forms a reef knot as shown in figures 4A-B. At its second end portion 94, the line round sling 9 forms a loop connection with the connection element 6. The loop connection is formed by threading the line round sling 9 through and around the connection element 6 and in such a way that the line round sling 9 is threaded through itself as shown in figures 4A-B. In figures 1-3, it is shown that two, three and four frame lines 3 are attached to one connection element 6. The net cages 82 of a farming facility 8 may also be distributed into a different pattern from that shown, and the number of frame lines 3 that may be attached to the connection ring 6 may be more than four.

The net-cage mooring line 4 extends from one connection element 6 to an attachment member of a kind known *per se* (not shown) in the floating collar 7. At their end portions, the net-cage mooring lines 4 are provided with line round slings 9. At the end portions of the net-cage mooring lines 4, closed loops 48 have been formed, for example by eye-splicing the ropes forming the net-cage mooring line 4, in a manner known *per se.* In its position of application, that is to say when extended, the line round sling 9 forms, at its first end portion 92, a loop-in-loop connection 96 with the net-cage mooring line 4. This connection constitutes a reef knot as shown in figures 4A-B. At its second end portion 94, the line round sling 9 forms a loop connection with the connection element 6. The loop connection is formed by threading the line round sling 9 through and around the connection element 6 and in such a way that the line round sling 9 is threaded through itself as shown in figures 4A-B. As shown in the figures 1-3, three net-cage mooring lines 4 extend from one connection element 6 to one floating collar 7. The number of net-cage mooring lines 4 extending from one connection element 6 to the floating collar 7 may be fewer than three or more than three. In the figures, three, six and twelve net-cage mooring lines 4 attached to one connection element 6 are shown.

The buoy line 5 extends from one connection element 6 to a floating body 52 floating in the water surface 54 as shown in figures 2 and 3. The floating body 52 may be a buoy or a float, as it is known within the trade. At its first end portion, the buoy line 5 is attached to the floating body 52 in a manner known *per se,* and this is not discussed any further. At its second end portion, the buoy line 5 is provided with a line round sling 9. At the second end portions of the buoy lines 5, closed loops 58 are formed, for example by eye-splicing the ropes forming the buoy line 5, in a manner known *per se.* In its position of application, that is to say when extended, the line round sling 9 forms, at its first end portion 92, a loop-in-loop connection 96 with the buoy line 5. This connection constitutes a reef knot as shown in figures 4A-B. At its second end portion 94, the line round sling 9 forms a loop connection with the connection element 6. The loop connection is formed by threading the line round sling 9 through and around the connection element 6 and in such a way that the line round sling 9 is threaded through itself as shown in figures 4A-B. In an alternative embodiment, the buoy line 5 is attached to the frame line 4 in a portion of the frame line 4 between two connection elements 6. The buoy line 5 and the floating body 52 provide for the frame line 4 and the connection elements 6 to be kept submerged at a desired depth relative to the water surface 54.

A node in the mooring system 1 includes the connection element 6. The connection element 6 is constituted by a round sling of a kind known *per se,* which is used in lifting operations to bind two objects together, but which, according to the invention, binds three objects or more than three objects together. The loop connection at the second end portion 94, 94' of the line round sling 9 may be formed in such a way that it alternately faces either side of the connection element 6 as shown in figures 4A-B.

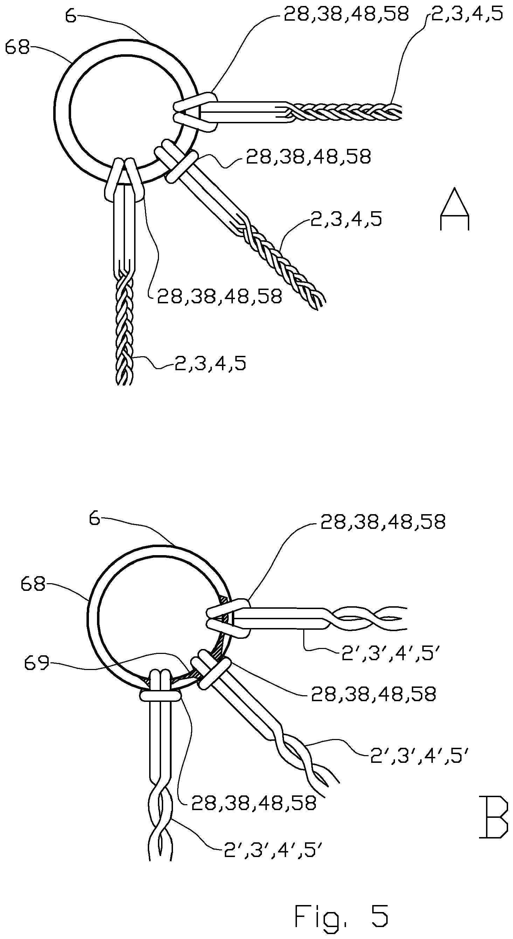

An alternative embodiment, which is not part of the invention, is shown in figures 5A-B. The line round sling 9 has been omitted and the anchor line 2, frame line 3, net-cage mooring line 4 and buoy line 5 are attached to the connection ring 6 by loop connections. The loop connection is formed by threading the loop 28, 38, 48, 58 through and around the connection ring 6 and in such a way that the loop 28, 38, 48, 58 is threaded through itself as shown in figures 5A-B. It is also possible to combine the use of a line round sling 9 to attach some lines 2, 3, 4, 5 and the use of loops 28, 38, 48, 58 to attach other lines 2, 3, 4, 5.

The connection element 6 includes a first sheath 68 which may be constituted by a soft sheet-like material. The sheet-like material may be a woven cloth of threads of a polymer material. The first sheath 68 may further be constituted by several layers of sheet-like material sewn together. This gives the first sheath 68 great wear resistance. The first sheath 68 may be one-coloured in a first colour. The first sheath 68 may surround a second sheath 69. The second sheath 69 may be constituted by a soft sheet-like material. The sheet-like material may be a woven cloth of threads of a polymer material. The second sheath 69 may be constituted by a one-coloured material of a second colour which is different from the first colour.

The line round sling 9 includes a third sheath 98 which may be constituted by a soft sheet-like material. The sheet-like material may be a woven cloth of threads of a polymer material. The third sheath 98 may further be constituted by several layers of a sheet-like material which have been sewn together. This gives the third sheath 98 great wear resistance. The third sheath 98 may be one-coloured in a third colour which may be different from the first colour and the second colour. The third sheath 98 may surround a fourth sheath 99. The fourth sheath 99 may be constituted by a soft sheet-like material. The sheet-like material may be a woven cloth of threads of a polymer material. The fourth sheath 99 may be constituted by a one-coloured material of a fourth colour, which may be different from the first, second and third colours.

The lines 2, 3, 4 and 5 may be of different types as it is shown schematically in figures 4A-B and 5A-B.

### Example

A node in a mooring system 1 is established by using round slings from Gunnebo Industries as a connection element 6 and as line round slings 9. The connection element 6 is constituted by a round sling specified as having a so-called working load limit (WLL) of 30 tonnes and a so-called minimum break load (MBL) of 210 tonnes. The connection element 6 may have an effective length of 4 m. To the connection element 6, several line round slings 9 are attached by loop connections. The line round sling 9 connecting the connection element 6 to the anchor line 2 may be constituted by a round sling having the specifications WLL = 15 tonnes; MBL = 84 tonnes. The MBL results from the nominal MBL value of 105 tonnes for the line round sling 9 having been reduced by the factor 0.8 because of the line round sling 9 having been threaded, at its end portion 94, through itself (choked) and around the connection element 6. This line round sling 9 may have an effective length of 2 m. The line round sling 9 connecting the connection element 6 to the frame line 3 may be constituted by a round sling having the specifications WLL = 8 tonnes; MBL = 44.8 tonnes. The MBL results from the nominal MBL value for the line round sling 9 of 56 tonnes having been reduced by the factor 0.8 because of the line round sling 9 having been threaded, at its end portion 94, through itself (choked) and around the connection element 6. This line round sling 9 may have an effective length of 2 m. The line round sling 9 connecting the connection element 6 to the net-cage mooring line 4 may be constituted by a round sling having the specifications WLL = 8 tonnes; MBL = 44.8 tonnes. The MBL results from the nominal MBL value of 56 tonnes for the line round sling 9 having been reduced by the factor 0.8 because of the line round sling 9 having been threaded, at its end portion 94, through itself (choked) and around the connection element 6. This line round sling 9 may have an effective length of 2 m. The line round sling 9 connecting the connection element 6 to the buoy line 5 may be constituted by a round sling having the specifications WLL = 8 tonnes; MBL = 44.8 tonnes. The MBL results from the nominal MBL value of 56 tonnes for the round sling 9 having been reduced by the factor 0.8 because of the line round sling 9 having been threaded, at its end portion 94, through itself (choked) and around the connection element 6. This line round sling 9 may have an effective length of 2 m.

Tensile tests have been carried out to compare the joining of ropes by a loop-in-loop connection, in which the eyes of the ropes have been formed by an eye splice, and a traditional shackle-eyelet connection in which the rope is laid around the eyelet and spliced to itself. In both cases, it turned out that the break occurred in the splice itself. Surprisingly, it turned out that the loop-in-loop connection was stronger than the shackle-eyelet connection. This means that the loop-in-loop connection 96 shown is a very strong connection.

The person skilled in the art will know that the dimensioning in the example is meant to illustrate the dimensions and dimensioning of the node, and that these dimensions and dimensioning will have to be adjusted in relation to the loads to which the farming facility 8 will presumably be subjected according to an individual analysis.

## Claims

1. A mooring system (1) for floating structures (8), the mooring system (1) including at least one anchor line (2) and at least two other lines (3, 4) extending in different directions relative to each other and in a different direction from that of the at least one anchor line (2), and said lines (2, 3, 4) being attached to an annular connection element (6), **characterized in that** the annular connection element (6) is constituted by a round sling comprising endless, flexible polymer material, and at least one of the lines (2, 3, 4) is attached to the annular connection element (6) with a line round sling (9).

2. The mooring system (1) in accordance with claim 1, **characterized in that** the round sling (6) includes an inner sheath (69) and an outer sheath (68).

3. The mooring system (1) in accordance with claim 2, **characterized in that** the inner sheath (69) is constituted by a sheet-like polymer material of a first colour and the outer sheath (68) is constituted by a sheet-like polymer material of a second colour, the first colour being different from the second colour.

4. The mooring system (1) in accordance with claim 1, **characterized in that** the line round sling (9) includes an inner sheath (99) and an outer sheath (98).

5. The mooring system (1) in accordance with claim 4, **characterized in that** the inner sheath (99) is constituted by a sheet-like polymer material of a third colour and the outer sheath (98) is constituted by a sheet-like polymer material of a fourth colour, the third colour being different from the fourth colour.

6. The mooring system (1) in accordance with claim 1, **characterized in that** each of the lines (2, 3, 4) are attached to the connection element (6) with a line round sling (9).

7. A floating structure (8) provided with a mooring system (1) according to claim 1.

8. A floating structure (8) according to claim 7, **characterized in that** the floating structure (8) is constituted by a farming facility for fish.

9. A method of establishing a mooring system (1) for a floating structure (8), in which the floating structure (8) is moored to a seabed (23) by at least one anchor line (2) which is attached at its first end portion to an anchor (22), and in which the mooring system (1) includes at least two other lines (3, 4) which are extended in different directions relative to each other, and which are extended in a different direction from that of the at least one anchor line (2), and in which said lines (2, 3, 4) are attached to an annular connection element (6), **characterized in that** the method further includes:
- providing a flexible, annular connection element (6) constituted by a round sling comprising endless, flexible polymer material;
- forming a closed loop (28, 38, 48) on one end portion of at least one line (2, 3, 4);
- forming a loop-in-loop connection (96) between the loop (28, 38, 48) of the line and a line round sling (9) at a first end portion (92) of the line round sling (9); and
- forming a connection between the flexible, annular connection element (6) and the line round sling (9) at a second end portion (94, 94') of the line round sling (9) by threading the line round sling (9) through and around the flexible, annular connection element (6) and in such a way that the line round sling (9) is threaded through itself.

10. The method in accordance with claim 9, wherein the method further includes:
- providing at least one of the flexible, annular connection element (6) and the line round sling (9) with an inner sheath (69, 99) of a sheet-like polymer material and an outer sheath (68, 98) of a sheet-like polymer material.

11. The method in accordance with claim 10, wherein the method further includes:
- providing at least one of the flexible, annular connection element (6) and the line round sling (9) with an inner sheath (69, 99) exhibiting a first colour or a third colour, and an outer sheath (68, 98) exhibiting a second colour or a fourth colour, the first and third colours being different from the second and fourth colours.

12. Use of a round sling comprising endless, flexible polymer material to form a flexible, annular connection element (6), and use of a round sling comprising endless, flexible polymer material to form a line round sling (9) in a mooring system (1) for a floating structure (8), wherein the mooring system (1) includes at least one anchor line (2), and wherein the mooring system (1) includes at least two other lines (3, 4) extending in different directions relative to each other and extending in a different direction from that of the at least one anchor line (2), and wherein said lines (2, 3, 4) are attached to the flexible, annular connection element (6) by the line round sling (9).

## Patentansprüche

1. Verankerungssystem (1) für schwimmende Strukturen (8), wobei das Verankerungssystem (1) mindestens eine Ankerleine (2) und mindestens zwei weitere Leinen (3, 4) aufweist, welche sich in unterschiedlichen Richtungen in Bezug auf einander und in einer Richtung, welche sich von der Richtung der mindestens einen Ankerleine (2) unterscheidet, erstrecken, wobei die besagten Leinen (2, 3, 4) an einem ringförmigen Verbindungselement (6) befestigt sind, **dadurch gekennzeichnet, dass** das ringförmige Verbindungselement (6) aus einer Rundschlinge besteht, welche endloses, flexibles Polymermaterial aufweist, und dass mindestens eine der Leinen (2, 3, 4) mit einer Leinen-Rundschlinge (9) an dem ringförmigen Verbindungselement (6) befestigt ist.

2. Verankerungssystem (1) nach Anspruch 1, **dadurch gekennzeichnet, dass** die Rundschlinge (6) eine Innenhülle (69) und eine Aussenhülle (68) aufweist.

3. Verankerungssystem (1) nach Anspruch 2, **dadurch gekennzeichnet, dass** die Innenhülle (69) aus einem folienähnlichen Polymermaterial einer ersten Farbe ausgebildet ist, und die Aussenhülle (68) aus einem folienähnlichen Polymermaterial einer zweiten Farbe ausgebildet ist, wobei die erste Farbe sich von der zweiten Farbe unterscheidet.

4. Verankerungssystem (1) nach Anspruch 1, **dadurch gekennzeichnet, dass** die Leinen-Rundschlinge (9) eine Innenhülle (99) und eine Aussenhülle (98) aufweist.

5. Verankerungssystem (1) nach Anspruch 4, **dadurch gekennzeichnet, dass** die Innenhülle (99) ausgebildet ist aus einem folienähnlichen Polymermaterial einer dritten Farbe und die Aussenhülle (98) ausgebildet ist aus einem folienähnlichen Polymermaterial einer vierten Farbe, wobei die dritte Farbe sich von der vierten Farbe unterscheidet.

6. Verankerungssystem (1) nach Anspruch 1, **dadurch gekennzeichnet, dass** jede der Leinen (2, 3, 4) mit einer Leinen-Rundschlinge (9) am Verbindungselement (6) befestigt ist.

7. Schwimmende Struktur (8), ausgestattet mit einem Verankerungssystem (1) gemäss Anspruch 1.

8. Schwimmende Struktur (8) gemäss Anspruch 7, **dadurch gekennzeichnet, dass** die schwimmende Struktur (8) aus einer Fischzuchtanlage besteht.

9. Verfahren zur Errichtung eines Verankerungssystems (1) für eine schwimmende Struktur (8), in welchem die schwimmende Struktur (8) an einem Meeresboden (23) festgemacht wird mittels mindestens einer Ankerleine (2), welche an ihrem ersten Endbereich an einem Anker (22) befestigt ist, und in welchem das Verankerungssystem (1) mindestens zwei weitere Leinen (3, 4) aufweist, welche sich in unterschiedlichen Richtungen in Bezug auf einander und in einer Richtung, welche sich von der Richtung der mindestens einen Ankerleine (2) unterscheidet, erstrecken, und in welchem die besagten Leinen (2, 3, 4) an einem ringförmigen Verbindungselement (6) befestigt sind, **dadurch gekennzeichnet, dass** das Verfahren des Weiteren folgende Schritte aufweist:
- Bereitstellung eines flexiblen, ringförmigen Verbindungselements (6), bestehend aus einer runden Schlinge, welche endloses, flexibles Polymermaterial aufweist;
- Bildung einer geschlossenen Schlinge (28, 38, 48) an einem Endbereich von mindestens einer Leine (2, 3, 4);
- Bildung einer Schlinge-in-Schlinge Verbindung (96) zwischen der Schlinge (28, 38, 48) der Leine und einer Leinen-Rundschlinge (9) an einem ersten Endbereich (92) der Leinen-Rundschlinge (9); und
- Bildung einer Verbindung zwischen dem flexiblen, ringförmigen Verbindungselement (6) und der Leinen-Rundschlinge (9) an einem zweiten Endbereich (94, 94') der Leinen-Rundschlinge (9), indem die Leinen-Rundschlinge (9) durch und um das flexible, ringförmige Verbindungselement (6) geschlauft wird, und auf eine Weise, sodass die Leinen-Rundschlinge (9) durch sich selbst geschlauft wird.

10. Verfahren nach Anspruch 9, wobei das Verfahren des Weiteren aufweist:
- Ausstattung von wenigstens einem Element ausgewählt aus dem flexiblen, ringförmigen Verbindungselement (6) und der Leinen-Rundschlinge (9) mit einer Innenhülle (69, 99) aus einem folienähnlichen Polymermaterial und mit einer Aussenhülle (68, 98) aus einem folienähnlichen Polymermaterial.

11. Verfahren nach Anspruch 10, wobei das Verfahren des Weiteren aufweist:
- Ausstattung von wenigstens einem Element ausgewählt aus dem flexiblen, ringförmigen Verbindungselement (6) und der Leinen-Rundschlinge (9) mit einer Innenhülle (69, 99), welche eine erste Farbe oder eine dritte Farbe aufweist, und mit einer Aussenhülle (68, 98), welche eine zweite Farbe oder eine vierte Farbe aufweist, wobei sich die erste und dritte Farbe von der zweiten und vierten Farbe unterscheiden.

12. Verwendung einer Rundschlinge aufweisend endloses, flexibles Polymermaterial zur Bildung eines flexiblen, ringförmigen Verbindungselements (6), und Verwendung einer Rundschlinge, welche ein endloses, flexibles Polymermaterial aufweist, zur Bildung einer Leinen-Rundschlinge (9) in einem Verankerungssystem (1) für eine schwimmende Struktur (8), wobei das Verankerungssystem (1) mindestens eine Ankerleine (2) aufweist, und wobei das Verankerungssystem (1) mindestens zwei weitere Leinen (3, 4) aufweist, welche sich in unterschiedlichen Richtungen in Bezug auf einander und in einer Richtung, welche sich von der Richtung der mindestens einen Ankerleine (2) unterscheidet, erstrecken, und wobei die besagten Leinen (2, 3, 4) mittels der Leinen-Rundschlinge (9) an dem flexiblen, ringförmigen Verbindungselement (6) befestigt sind.

## Revendications

1. Un système d'amarrage (1) pour structures flottantes (8), le système d'amarrage (1) comportant au moins une ligne d'ancrage (2) et au moins deux autres lignes (3, 4) s'étendant dans différentes directions les unes par rapport aux autres et dans une direction différente à celle de l'au moins une ligne d'ancrage (2), et les dites lignes (2, 3, 4) étant fixées à un élément de connexion annulaire (6), caractérisé en ce l'élément de connexion annulaire (6) est constitué d'une élingue ronde comprenant un matériau polymère souple sans fin, et au moins une des lignes (2, 3, 4) est fixée à l'élément de connexion annulaire (6) avec une élingue ronde de ligne (9).

2. Le système d'amarrage (1) selon la revendication 1, **caractérisé en ce que** l'élingue ronde (6) inclut une gaine intérieure (69) et une gaine extérieure (68).

3. Le système d'amarrage (1) selon la revendication 2, **caractérisé en ce que** la gaine intérieure (69) est constituée d'un matériau polymère de type feuille ayant une première couleur et une gaine extérieure (68) est constituée d'un matériau polymère de type feuille ayant une seconde couleur, la première couleur étant différente de la seconde couleur.

4. Le système d'amarrage (1) selon la revendication 1 **caractérisé en ce que** l'élingue ronde de ligne (9) inclut une gaine intérieure (99) et une gaine extérieure (98).

5. Le système d'amarrage (1) selon la revendication 4, **caractérisé en ce que** la gaine intérieure (99) est constituée d'un matériau polymère de type feuille ayant une troisième couleur et la gaine extérieure (98) est constituée d'un matériau polymère d'un type film ayant une quatrième couleur, la troisième couleur étant différente de la quatrième couleur.

6. Le système d'amarrage (1) selon la revendication 1, **caractérisé en ce que** chacune des lignes (2, 3, 4) est fixée à l'élément de connexion (6) au moyen d'une élingue ronde de ligne (9).

7. Une structure flottante (8) munie d'un système d'amarrage (1) selon la revendication 1.

8. Une structure flottante (8) selon la revendication 7, **caractérisée en ce que** la structure flottante (8) est constituée d'une installation d'élevage pour poissons.

9. Un procédé pour établir un système d'amarrage (1) pour une structure flottante (8), dans lequel la structure flottante (8) est amarrée au fond marin (23) par l'intermédiaire d'au moins une ligne d'ancrage (2) qui est fixée au niveau de sa première partie terminale à une ancre (22), et dans lequel le système d'amarrage (1) inclut au moins deux autres lignes (3, 4) qui s'étendent dans différentes directions les unes par rapport aux autres, et qui s'étendent dans une direction différente à celle de l'au moins une ligne d'ancrage (2), et dans lequel les dites lignes (2, 3, 4) sont fixées à un élément de connexion annulaire (6), **caractérisé en ce que** le procédé inclut en outre:
- fournir un élément de connexion annulaire flexible (6) constitué d'une élingue ronde comprenant un matériau polymère souple sans fin;
- former une boucle fermée (28, 38, 48) au niveau d'une partie terminale de l'au moins une ligne (2, 3, 4);
- former une connexion boucle-en-boucle (96) entre la boucle (28, 38, 48) de la ligne et une élingue ronde de ligne (9) au niveau d'une première partie terminale (92) de l'élingue ronde de ligne (9); et
- former une connexion entre l'élément de connexion annulaire flexible (6) et l'élingue ronde de ligne (9) au niveau d'une seconde partie terminale (94, 94') de l'élingue ronde de ligne (9) en enfilant l'élingue ronde de ligne (9) à travers et autour de l'élément de connexion annulaire flexible (6) et de telle manière que l'élingue ronde de ligne (9) est enfilée à travers elle-même.

10. Le procédé selon la revendication 9, dans lequel le procédé inclut en outre:
- fournir au moins un élément de connexion annulaire flexible (6) et l'élingue ronde de ligne (9) avec une gaine intérieure (69, 99) de matériau polymère de type feuille et une gaine extérieure (68, 98) de matériau polymère de type feuille.

11. Le procédé selon la revendication 10, dans lequel le procédé inclut en outre:
- fournir au moins un l'élément de connexion annulaire et flexible (6) et l'élingue ronde (9) avec une gaine intérieure (69, 99) présentant une première couleur ou une troisième couleur, et une gaine extérieure (68, 98) présentant une seconde couleur ou une quatrième couleur, la première et troisième couleur étant différentes de la seconde et quatrième couleur.

12. Utilisation d'une élingue ronde comprenant un matériau polymère flexible sans fin pour former un élément de connexion annulaire flexible (6), et utilisation d'une l'élingue ronde comprenant un matériau polymère flexible sans fin pour former une l'élingue ronde de ligne (9) dans un système d'amarrage (1) pour une structure flottante (8), dans lequel le système d'amarrage (1) inclut au moins une ligne d'ancrage (2) et dans lequel le système d'amarrage (1) inclut au moins deux autres lignes (3, 4) s'étendant dans différentes directions les unes par rapport aux autres et dans une direction différente à celle de l'au moins une ligne d'ancrage (2), et dans lequel les dites lignes (2, 3, 4) sont fixées à un élément de connexion annulaire flexible (6) par l'élingue ronde de ligne (9).
